# NEUE EUROPÄISCHE PATENTSCHRIFT

(11) **EP 0 640 291 B2**
(45) Veröffentlichungstag und Bekanntmachung des Hinweises auf die Entscheidung über den Einspruch: **24.11.2004**
(45) Hinweis auf die Patenterteilung: 04.10.2001
(21) Anmeldenummer: 94112599.9
(22) Anmeldetag: 12.08.1994
(51) Int. Cl.: A23B 4/22, A23L 1/314

(54) **Verwendung von Bacteriocin erzeugende Mikroorganismen zum Reifen von Rohwurst**
Use of bacteriocin producing microorganismes to cure raw sausage
Utilisation de microorganismes produisant de la bactériocine pour la maturation de saucisse crue

(30) Priorität: 24.08.1993 DE 4328368
(43) Veröffentlichungstag der Anmeldung: 01.03.1995
(73) Patentinhaber: Karl Müller GmbH & Co., 70469 Stuttgart (DE)
(72) Erfinder: Tichaczek, Petra S., D-70597 Stuttgart (DE); Pohle, Simone B., D-73760 Ostfildern (DE); Vogel, Rudi F., Dr., D-70794 Filderstadt (DE); Hammes, Walter P., Prof. Dr., D-70794 Filderstadt (DE)
(74) Vertreter: Thiel, Christian, Dr. Dipl.-Chem.

(56) Entgegenhaltungen:
- EP-A- 0 321 692
- CH-B- 347 421
- US-A- 3 814 817
- Lücke and Hechelmann, Fleischwirtschung 67(3), 1987, 307-314
- Schillinger et al, J. of Applied Bacteriology, 70, 1991, 473-478
- Tichaczek et al, System. Appl. Microbiol. 15, 1992, 460-468

## Beschreibung

Die Erfindung betrifft die Verwendung von Bacteriocin erzeugenden Mikroorganismen Lactobacillus curvatus DSM 8430 zum Reifen von Rohwurst sowie ein Mittel zum Reifen von Rohwurst, das diese Bacteriocin erzeugende Mikroorganismen enthält. Der Stamm wurde bei der deutschen Sammlung für Mikroorganismen und Zellkulturen DSM nach den Bestimmungen des Budapester Vertrags hinterlegt und wird dort unter den Eingangsnummer DSM 8430 geführt.

Es ist seit langem bekannt, zur Fermentierung von rohen Pökelfleischwaren (Absäuerung) Milchsäurebildner , als Starterkulturen einzusetzen. Diese konventionellen Säurebildner entstammen bisweilen fremden Biotopen und sind im allgemeinen auf ihre Leistungsfähigkeit und ihre Präparationsmöglichkeit hin selektiert.

DE 37 39 989 C1 beschreibt den Mikroorganismus Lactobacillus curvatus DSM 4265, der zur Herstellung von Pökelfleischwaren geeignet ist. Dieser Mikroorganismus wird in einer Menge von 5 X 10⁹ Keimen pro kg Wurstmasse in gefriergetrocknetem Zustand zugesetzt. Die Reifung unter kontrollierten Klimabedingungen dauert etwa 10 Tage und führt zu einer Absenkung des pH-Werts, zur Ausbildung eines typischen Aromas sowie zu einer Stabilisierung der Rohwurst durch Behinderung der spontanen Säurebildnerflora.

Insgesamt hat sich aber gezeigt, daß der Reifungsprozeß mit solch herkömmlichen Laktobazillen bei relativ hohen Reifungstemperaturen von bis zu 25° C immer in Konkurrenz zur Spontanflora stattfindet. Da der Reifungsprozeß relativ langwierig ist, nimmt die Keimzahl der Spontanflora nicht unerheblich zu, was nicht nur unter hygienischen Gesichtspunkten unerwünscht ist, sondern auch unter dem Gesichtspunkt der Kontrollierbarkeit des Reifungsprozesses.

Des weiteren wurden zur Unterdrückung von unerwünschter Spontanflora besonders wachstumsstarke Stämme der Gattung Lactobacillus entwickelt. Es hatsich aber gezeigt, daß diesewachstumsstarken und konkurrenzfähigen Stämme mit der Zeit zur Selektionierung einer konkurrenzfähigen Spontanflora führen können, die den Vorteil der Wachstumsstärke wieder zunichte machen. Außerdem ist es erforderlich, auch diese wachtumsstarken Stämme in relativ hohen Keimzahlen einzusetzen, damit sie sich gegenüber der Spontanflora durchsetzen können. Erst der hierdurch vermittelte Wachstumsvorsprung führt zur weitgehenden Unterdrückung der Spontanflora.

Es ist schließlich bekannt, daß gewisse Stämme, insbesondere auch der Gattung Lactobacillus, sogenannte Bacteriocine freisetzen, die die Vermehrung anderer Stämme der gleichen Gattung und auch anderer Gattungen unzerdrücken. Bacteriocine sind Peptide, Proteine oder Proteinkomplexe mit bakteriocider Wirkung, die vor allem gegen artverwandte Mikroorganismen wirksam werden und deren Wachstum unterdrücken. Beispiele bekannter Bacteriocine sind Curvacin, Sakacine sowie Pediocine.

Ziel der Erfindung ist die Bereitstellung eines Mikroorganismus, der als Starterkultur zur Reifung von Fleischund Wurstwaren, insbesondere von Rohwurst eingesetzt werden kann und geeignet ist, die konkurrierende Spontanflora weitestgehend zu unterdrücken. Gleichzeitig soll eine solche Starterkultur zu einem gleichmäßigen, qualitativ und geschmacklich einwandfreien Produkt mit einer durchgehenden Umrötung und einer stabilen Pökelfarbe führen.

Dieses Ziel wird durch die Verwendung Bacteriocin erzeugender Mikroorganismen des Stammes Lactobacillus curvatus DSM 8430 erreicht. Besonders geeignet sind diese Mikroorganismen für die Reifung von schnittfester Rohwurst, aber auch für die Erzeugung streichfähiger Rohwurst.

Es wurde gefunden, daß die von diesen Mikroorganismen erzeugten Bacteriocine die spontane Konkurrenzflora praktisch vollständig unterdrücken, ohne daß sich Nachteile für die Haltbarkeit und Verträglichkeit der erzeugten Wurstwaren ergeben. Die damit hergestellten Produkte genügen geschmacklich und qualitativ allen an sie gestellten Anforderungen und weisen eine optimale Umrötung auf.

Die Erfindung betrifft ferner ein Mittel zum Reifen von Rohwurst, das den oben genannten Mikroorganismus enthält. Zweckmäßigerweise enthält das Mittel den Stamm in gefriergetrocknetem Zustand, ggf. neben üblichen weiteren Bestandteilen. Übliche weitere Bestandteile sind beispielsweise Nährstoffe und - salze. Bacteriocinresistente übliche Co-Starter, der Gattungen Micrococcaceae oder Staphylococcaceae sind ebenfalls in dem Mittel enthalten.

Vorzugsweise wird das Mittel in Form einer Einheitspackung konfektioniert, die eine für die jeweils gewünschte Rohwurstmenge ausreichende Keimzahl des jeweiligen Mikroorganismus enthält.

Die Mikroorganismen werden in einer Menge von 10⁵ bis 10¹⁰ CFU/kg Wurstmasse eingesetzt, insbesondere in einer Menge von 10⁷ bis 10⁹ CFU/kg.

Lactobacillus curvatus DSM 8430 hat u. a. den Vorteil, daß es über eine Plasmiduntersuchung schnell und einfach nachgewiesen werden kann.

Es wurde überraschend gefunden, daß das von dem Mikroorganismus erzeugte Bacteriocin Curvacin A (L. curvatus DSM 8430) sich im Laufe des Reifungsverfahrens im Produkt selbst abbaut. Bei der Lagerung bei 4° C nahm die Bacteriocinaktivität innerhalb von 8 Tagen auf einen Wert von 50 % ab; nach 21 Tagen Lagerung war bei dieser Temperatur keine Bacteriocinaktivität mehr nachweisbar. Dies bedeutet, daß unter den bei der Rohwurstherstellung üblichen Lager- und Nachreifebedingungen die Bacteriocinaktivität aus dem Produkt verschwindet, bevor es in den Handel gelangt.

Die erfindungsgemäße Starterkultur führt bei guter Säuerung der damit behandelten Rohwurst zu einer kontrollierten und standardisierten Fermentierung. Die Behinderung der spontanen Mikroorganismenflora vermindert das hygienische Risiko und führt zur Ausbildung eines für den erfindungsgemäßen Mikroorganismus charakteristischen Fermentationsaromas. Die bei der Fermentierung ausgebildete typische Pökelfarbe erweist sich über die Haltbarkeitsdauer der Wurst als stabil.

Die Fermentierungseigenschaften des Mikroorganismus Lactobacillus curvatus DSM 8430 wurden, teilweise in Konkurrenz zu anderen Laktobazillen, näher untersucht. Die Ergebnisse sind in den beigefügten Abbildungen dokumentiert. Von diesen Abbildungen zeigt
- Fig. 1: das Wachstum von L. curvatus DSM 8430 in Abhängigkeit von der Zeit und dem eingesetzten Inokulum sowie den aus der Fermentierung resultierenden pH-Wert;
- Fig. 2A: das Wachstum von L. curvatus DSM 8430 und L. curvatus LTH 683 bei Co-Inokulation sowie
- Fig. 2B: das Wachstum einer nicht Bacteriocin erzeugenden Variante des Stammes L. curvatus DSM 8430 bei Co-Inokulation mit L. curvatus LTH 683 in Abhängigkeit von der Zeit.

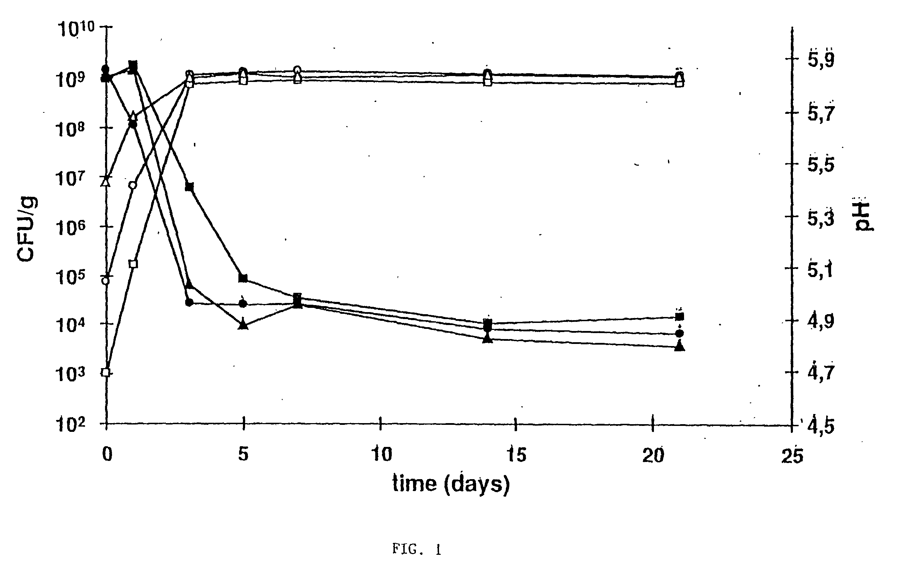

In Fig. 1 ist der Einfluß der inokulierten Menge L. curvatus DSM 8430 auf die schließlich erreichten Endwerte der Zelldichte (offene Symbole) und den schließlich in der Rohwurst erreichten pH-Wert (schwarze Symbole) dargestellt. Drei Chargen einer herkömmlichen Rohwurstmischung wurden mit 10³ (Quadrate), 10⁵ (Kreise) und 10⁷ (Dreiecke) CFU/g L. curvatus DSM 8430 inoculiert. Aus der Masse wurden Würste hergestellt und Proben auf die Gesamtzahl der Laktobazillen untersucht. Die Gegenwart von Bacteriocin produzierenden Mikroorganismen wurde durch Replikationsanalyse auf BSM Agar (P.S. Tichaczek et al., System. Appl. Microbiol. 15, 460 (1992)) und Plasmidprofilanalyse von Isolaten auf MRSS Agar (R.F. Vogel et al., System. Appl. Microbiol. 15, 129 (1992)) untersucht. Das Wachstum von L. curvatus DSM 8430 in den Fermentationsmischungen ist in Fig. 1 wiedergegeben. In Würsten, die mit 10⁵ oder 10⁷ CFU/g des Mikroorganismus inokuliert worden waren, wurden nur Bacteriocin erzeugende Kolonien in allen Fermentationsstadien nachgewiesen, d. h. alle Kolonien erzeugten einen deutlichen Hemmhof im Indikatorrasen und alle Plasmidprofile waren identisch mit dem von L. curvatus DSM 8430. In mit 10³ CFU/g Mikroorganismus inokulierten Würsten machte der Bacteriocinproduzent > 80 % aller nach 5 Tagen auf MRSS Agar reisolierten Laktobazillen aus. Da im Ausgangsmaterial für die Wurstherstellung 2 X 10³ CFU/g Laktobazillen vom Wildtyp vorhanden waren, folgt, daß der zugesetzte Starter in der Lage ist, die Spontanflora trotz ihres zweifachen Überschusses zu dominieren. In den mit 10⁵ und 10⁷ CFU/g inokulierten Wurstmischungen wurde keine Spontanflora mehr nachgewiesen.

Ausweislich Fig. 1 wird mit allen zugesetzten Startermengen eine zufriedenstellende Säuerung der Rohwurstmasse von etwa pH 4,9 erreicht (schwarze Symbole).

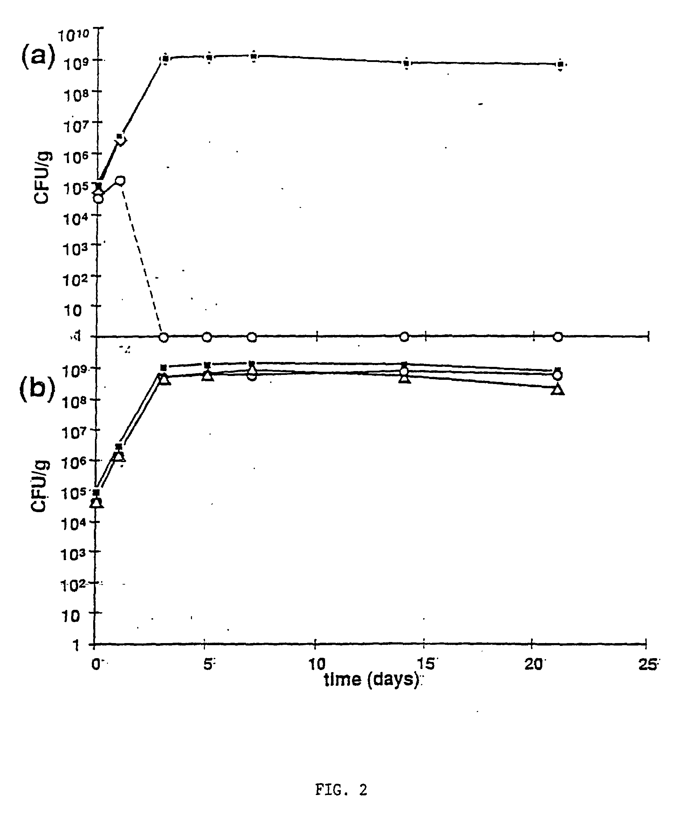

Die relative Konkurrenzfähigkeit des Bacteriocin produzierenden Stammes L. curvatus DSM 8430 wurde in Rohwürsten untersucht, die mit verschiedenen Kombinationen von Laktobazillen als Starter inokuliert wurden. Bei Inokulation mit 5 X 10⁴ CFU/g L. curvatus und DSM 8430 und 5 X 10⁴ CFU/g eines hoch konkurrenzfähigen kommerziellen Starters, L. curvatus LTH 683, der kein Bacteriocin erzeugt, macht der Bacteriocin erzeugende Starter nach 3-bzw. 5-tägiger Fermentierung 100 % der in der Rohwurstmasse nachgewiesenen Laktobazillen aus (Fig. 2A). Dies zeigt die absolute Dominanz des Bacteriocin erzeugenden Starters. In Fig. 2A bezeichnen die Kreise die Keimzahlen an L.c. LTH 683, die (teilweise überlagerten) Rauten die an L.c. DSM 8430 und die schwarzen Quadrate die Gesamtkennzahl der Laktobazillen.

In einer weiteren Untersuchung wurde der Beitrag der Bacteriocinproduktion auf die Konkurrenzfähigkeit des Bacteriocinerzeugers in einer Vergleichsstudie mit einer Variante von L. curvatus DSM 8430 (Bac⁻ Ery^{R}) untersucht, der die Fähigkeit zur Bacteriocinerzeugung fehlt. Es wurden jeweils 5 X 10⁻⁴ CFU/g L. curvatus DSM 8430 (Bac⁻) und L. curvatus LTH 683 inokuliert. Zur Erleichterung der Identifizierung wies die nicht Bacteriocin erzeugende Variante von DSM 8430 ein Erythromycin-Resistenzgen auf (Ery^{R}). Nach 5-tägiger Fermentierung in einer Standard-Rohwurstmasse machte der Stamm L.c. DSM 8430 (Bac⁻ Ery^{R}) etwa 50 % der in der Rohwurstmassen vorhandenen Laktobazillen aus, der Stamm LTH 683 ebenfalls etwa 50 %. Eine Plasmidprofilanalyse zeigte, daß andere Stämme der Spontanflora nicht vorhanden waren. Das Ergebnis ist in Fig. 2B dargestellt (L.c. LTH 683: Kreise; L.c. DSM 8430 (Bac⁻ Ery^{R}): Dreiecke; Laktobazillen gesamt: schwarze Quadrate). Es zeigt sich, daß der Stamm DSM 8430 (Bac⁻ Ery^{R}) in etwa die gleiche Konkurrenzstärke hat, wie der bekannte Stamm LTH 683. Ein entsprechendes Ergebnis wurde mit L. c. DSM 8430 (Bac⁻), einer Variante ohne die Fähigkeit Bacteriocin zu erzeugen und ohne das Resistenzgen sowie L. c. LTH 683 erzielt. Die Erhöhung der Konkurrenzfähigkeit gemäß Darstellung in Fig. 2A beruht somit ausschließlich auf der Fähigkeit von DSM 8430, Bacteriocin zu erzeugen.

Zum Vergleich wurden die sensorischen Eigenschaften von mit L.c. DSM 8430, LTH 683 sowie L.s. LTH 677 und 673 bestimmt. Die bekannten Starter L.c. LTH 683 und L.s. LTH 677 werden zur Erzeugung von fermentierten Rohwürsten hoher Qualität verwandt. Mit jeweils 10⁷ CFU/g der oben genannten Stämme inokulierte Wurstmassen wurden nach Standardverfahren gereift. Das Wachstum der Starterkulturen und der Abnahme des pH-Werts verliefen gleichförmig und führten jeweils zu Endwerten von 8 X 10⁸ CFU/g der jeweiligen Starterkultur und einem pH-Wert von 5,2 nach 5-tägiger Fermentierung. Durch Plasmidprofilanalyse konnte in allen Fällen sichergestellt werden, daß der Ausgangsstarter im Produkt dominierte. Nach 21-tägiger Fermentierung und Reifung wurden die Produkte optisch und sensorisch nach Chow et al., Taiwan Sugar 34, 19 (1987) bestimmt. Hinsichtlich Geschmack und Aussehen schnitt L. c. DSM 8430 am besten ab. L.s. DSM 6742 erzielte ebenfalls äußerst zufriedenstellende Werte.

Es ist zu berücksichtigen, daß mit den Bacteriocinerzeugern das Inokulum ohne weiteres auf 10⁴ bis 10⁵ CFU/g abgesenkt werden kann, da aufgrund der Wachstumsstärke des Mikroorganismus die Konkurrenzflora auch bei diesem Inokulum noch wirksam unterdrückt wird.

Der Vorteil des erfindungsgemäß eingesetzten Bacteriocin erzeugenden Mikroorganismus liegt vor allem in der Verminderung des hygienischen sowie des sensorischen qualitätsbeeinflussenden Risikos, das aus dem Wachstum unerwünschter Spontanflora herrührt. Das hygienische Risiko ist zwar bei Rohwürsten mit sehr niedrigen pH-Werten vergleichsweise gering, steigt jedoch mit zunehmendem Wassergehalt und zunehmenden pH-Werten des Produktes stark an. Verbunden ist dieses hygienische Risiko in allen Fällen auch mit unerwünschten optischen und geschmacklichen Veränderungen am Produkt. Wie die vorstehend geschilderten Experimente zeigen, beruht die Verminderung dieses qualitativen und hygienischen Risikos vor allem auf der Erzeugung von Bacteriocinen durch den eingesetzten Starter mit dieser Fähigkeit. Dabei wurde auch gefunden, daß die Bacteriocine nicht nur zu einer spezifischen Inhibierung von anderen Laktobazillen führen, sondern auch geeignet sind, Mikroorganismen anderer Gattungen zu unterdrücken, beispielsweise Listeria monocytogenes. Im übrigen weist insbesondere L. curvatus DSM 8430 eine ausgezeichnete Konkurrenzstärke auf, die die Größenordnung des bekannt konkurrenzstarken L. curvatus LTH 683 übertrifft.

Es wurde schließlich auch gefunden, daß das von L. curvatus DSM 8430 erzeugte Bacteriocin Curvacin A keinen Einfluß auf das Wachstum von Micrococcus varians und Staphylococcus carnosus hat, die in einigen Starterzubereitungen zusammen mit Laktobazillen eingesetzt werden.

L. curvatus DSM 8430 ist ausgesprochen kochsalztolerant bis zu einer Menge von 40 g/l. Dabei hat die Kochsalzkonzentration keinen Einfluß auf die Fähigkeit des Mikroorganismus, Curvacin A zu erzeugen. Die Fermentierung kann ferner bei Temperaturen unterhalb 25° C bis hinunter zu Temperaturen unterhalb 15° C erfolgen, ohne daß die Fähigkeit zur Erzeugung von Curvacin A verlorengeht. Das Optimum der Curvacin A-Produktion liegt bei Temperaturen zwischen 15 und 20° C. Diese Fähigkeit zur Bacteriocinerzeugung auch bei niedrigen Fermentierungstemperaturen ist ein nicht zu unterschätzender Vorteil, da erfahrungsgemäß die Fermentierungstemperatur einen Einfluß auf den Verlauf der Fermentierung, die die hygienischen Eigenschaften des Produkts und die Vermehrung der Spontanflora hat.

Die Erfindung wird durch das folgende Ausführungsbeispiel näher erläutert.

### Beispiel

Lactobacillus curvatus DSM 8430 wurde zur Herstellung von schnittfester Rohwurst (Salami) verwandt.

### Materialzusammenstellung

30 kg Rindfleisch, grob entsehnt, sichtbarer Fettanteil 5 %,
30 kg Schweinefleisch, sehnenfrei, sichtbarer Fettanteil 5 %,
20 kg Schweinebauch, sichtbarer Fettanteil 60 %,
20 kg Rückenspeck, ohne Schwarte

### Zusätze je 1 kg Material

| | |
|---|---|
| 28,0 g | Kochsalz |
| 0,3 g | Kaliumnitrat |
| 4,0 g | Glukose |
| 2,0 g | Pfeffer, weiß, gemahlen |
| 5 X 10⁸ | CFU Lactobacillus curvatus DSM 8430, gefriergetrocknet |
| 5 X 10⁹ | CFU Staphylococcus carnosus, gefriergetrocknet (zur Optimierung der Umrötung, handelsübliche Qualität) |

Zur Herstellung der Rohwurstmasse wurden die Materialien jeweils in Stücke geschnitten, das Rindfleisch, der Schweinebauch und der Speck hartgefroren und das Schweinefleisch gut durchgekühlt und unmittelbar vor der Verarbeitung in üblicher Weise gewolft.

Die gefriergetrockneten Starterkulturen Lactobacillus curvatus DSM 8430 und Staphylococcus carnosus wur den in 500 ml Wasser mit einer üblichen Reaktivierungsmischung eingerührt.

Das Rindfleisch wurde bei Zugabe der Starterkulturen im Kutter so lange vorzerkleinert, bis die Masse etwas bindet. Danach wurden das Kaliumnitrat, die Glukose sowie der Pfeffer hinzugefügt und die Masse noch eine kurze Zeit im Kutter weiter laufengelassen, um eine ausreichende Vermischung zu erzielen. Danach wurden der Speck und der Schweinebauch zugesetzt. Es wurde so lange weitergekuttert, bis der Speck eine Körnung von 6 - 8 mm aufwies. Anschließend wurde das vorgewolfte Schweinefleisch mit dem Kochsalz eingekuttert und die Gesamtmasse so lange weitergekuttert, bis das Fett die übliche Körnung von etwa 2 mm und die Wurstmasse Bindung aufwies.

Die fertige Wurstmasse mit einer Temperatur von -2°C wurde in wasserdurchlässige Hautfaserdärme vom Kaliber 70 mm eingefüllt. Anschließend wurden die gefüllten Därme zur Reifung in die Klimakammer verbracht.

Zunächst wurden die Würste bei 70 % relativer Luftfeuchtigkeit und etwa 18°C Temperatur 6 Stunden vorkonditioniert, um das äußere Schwitzwasser wegzutrocknen. Danach wurde zur weiteren Konditionierung die relative Luftfeuchtigkeit 18 Stunden auf 94 % erhöht. Die eigentliche Reifung erfolgte bei einer Anfangstemperatur von 24°C über einen Zeitraum von 36 bis 48 Stunden, wobei die Temperatur und Luftfeuchtigkeit langsam auf übliche Bedingungen zurückgenommen und die Würste fertiggereift wurden.

Nach der Trocknung und der üblichen Nachreife wurde ein pH-Wert von etwa 5,0 festgestellt. Die Würste wiesen eine hervorragende Umrötung sowie eine sehr haltbare und ansprechende Pökelfarbe im Anschnitt auf. Die sensorische Prüfung ergab ein qualitativ überdurchschnittliches Produkt.

## Patentansprüche

1. Verwendung des Bakteriozin erzeugenden Mikroorganismus Lactobacillus curvatus DSM 8430 zum Reifen von Rohwurst in einer Menge von 10⁵ bis 10¹⁰cfu/kg Rohwurstmasse.

2. Verwendung nach Anspruch 1, **dadurch gekennzeichnet, daß** der Bakteriozin erzeugende Mikroorganismus in einer Menge von 10⁷ bis 10⁹ cfu/kg Rohwurstmasse eingesetzt werden.

3. Mittel zum Reifen von Rohwurst, **dadurch gekennzeichnet, daß** es Bakteriozin erzeugende Mikroorganismen des Stamms Lactobacillus curvatus DSM 8430 zusammen mit Mikroorganismen der Gattung Mikrococcus oder Staphylococcus enthält.

4. Mittel nach Anspruch 3, **dadurch gekennzeichnet, daß** es Mikroorganismen in gefriergetrocknetem Zustand enthält.

5. Mittel nach Anspruch 3 oder 4 in Form einer Einheitspackung mit einer für eine gewünschte Rohwurstmenge ausreichenden Keimzahl.

## Claims

1. Use of the bacteriocin producing microorganism lactobacillus curvatus DSM 8430 for the ripening of raw sausage in an amount of 10⁵ to 10¹⁰ cfu/kg mass of raw sausage.

2. Use according to claim 1, **characterized in that** the microorganism producing bacteriocin is employed in an amount of 10⁷ to 10⁹ cfu/kg mass of raw sausage.

3. Means for the ripening of raw sausage, **characterized in that** it contains microorganisms producing bacteriocin, the microorganisms belonging to the strain lactobacillus curvatus DSM 8430, together with microorganisms belonging to the genus micrococcus or staphylococcus.

4. Means according to claim 3, **characterized in that** it contains the microorganisms in a freeze-dryed state.

5. Means according to claim 3 or 4 in the form of a uniform package containing a cell number sufficient for a desired amount of raw sausage.

## Revendications

1. Utilisation de micro-organismes produisant de la bactériocine Lactobacillus curvatus DSM 8430 pour le mûrissement de saucisse crue en une quantité de 10⁵ à 10¹⁰ CFU/kg de masse de saucisse crue.

2. Utilisation selon la revendication 1, **caractérisée en le fait que** le micro-organisme produisant de la bactériocine est employé en une quantité de 10⁷ à 10⁹ CFU/kg de masse de saucisse crue.

3. Produit pour le mûrissement de la saucisse crue, **caractérisé en ce qu'**il contient des micro-organismes produisant de la bactériocine de la souche Lactobacillus curvatus DSM 8430, conjointement avec des micro-organismes du genre Micrococcus ou Staphylococcus.

4. Produit selon la revendication 3, **caractérisé en ce qu'**il contient les micro-organismes à l'état lyophilisé.

5. Produit selon la revendication 3 ou 4, sous forme d'un emballage unitaire avec un nombre de germes suffisant pour une quantité de saucisse crue souhaitée.
